**Europäisches Patentamt**

**European Patent Office**

**Office européen des brevets**

(19)

(11) Veröffentlichungsnummer: **0 083 006**
**B1**

(12) # EUROPÄISCHE PATENTSCHRIFT

(45) Veröffentlichungstag der Patentschrift:
04.11.87

(51) Int. Cl.⁴: **B 01 D 13/00**

(21) Anmeldenummer: **82111487.3**

(22) Anmeldetag: **10.12.82**

(54) **Flachmembran-Trenngerät.**

(30) Priorität: **24.12.81 DD 236272**

(43) Veröffentlichungstag der Anmeldung:
**06.07.83 Patentblatt 83/27**

(45) Bekanntmachung des Hinweises auf die Patenterteilung:
**04.11.87 Patentblatt 87/45**

(84) Benannte Vertragsstaaten:
**CH DE FR GB LI NL**

(56) Entgegenhaltungen:
**EP-A-0 030 905**
**DD-C-114 205**
**FR-A-2 383 694**
**US-A-3 398 833**
**US-A-4 230 564**

**PATENTS ABSTRACTS OF JAPAN, Band 1, Nr. 140,
16. November 1977, Seite 3028C77**

(73) Patentinhaber: **VEB Chemieanlagenbaukombinat
Leipzig- Grimma, Bahnhofstrasse 3-5, DDR- 7240
Grimma (DD)**

(72) Erfinder: **Dreyer, Siegfried, Dipl.- Ing., Wilhelm-
Raabe- Strasse 19, DDR- 3080 Magdeburg (DD)**

(74) Vertreter: **Patentanwälte Beetz sen. - Beetz jun.
Timpe - Siegfried - Schmitt- Fumian,
Steinsdorfstrasse 10, D-8000 München 22 (DE)**

### Beschreibung

Die Erfindung betrifft ein Flachmembran-Trenngerät der im Anspruch 1 angegebenen Gattung, mit dem Membranprozesse wie die Ultrafiltration, Reversosmose und dergleichen zum Abtrennen von gelösten und teilweise auch suspendierten Stoffen aus echten und kolloidalen Lösungen durchgeführt werden können.

Es sind bereits verschiedene Arten von Flachmembran-Trenngeräten bekannt, bei denen durch unterschiedliche Mittel jeweils eine Flüssigkeitsströmung an der Membranoberfläche erzeugt wird, die prozeßhemmende Deckschichten auf der Membran möglichst verhindern und eine Konzentrationsüberhöhung in Membrannähe weitgehendst abbauen soll. Zu diesem Zweck wird eine Depolarisierungsflüssigkeit durch unterschiedlich geformte enge Spalte gedrückt oder es werden zirkulierende Membranelemente wie rotierende Scheiben, teilweise rotierende Scheiben sowie Rotation eines kompletten Trenngerätes in Betracht gezogen.

Aus der DD-PS 114 205 ist ein Ultrafiltrationsgerät bekannt, bei dem die Erkenntnisse aus der Drallzelle zu einem Trenngerät mit mehreren übereinander angeordneten Kammern kombiniert werden. Die zusammengefügten Kammern sind in einem Druckbehälter untergebracht, der durch Druckluft und/oder eine Umlaufpumpe mit der zu trennenden Lösung beaufschlagt wird, so daß die düsenartigen Einlaufkanäle der im Plattenpaket enthaltenen Drallringe keine separaten Zulaufanschlüsse erfordern. Da jedoch die Drallströmung durch Düsen erzeugt wird, entstehen in Düsennähe erhebliche Beanspruchungen, die zur Zerstörung der trennaktiven Schicht der Membranen und damit zu ihrem vorzeitigen Ausfall bei Dauerbetrieb führen. Ferner bietet die Dralldepolarisierung gegenüber anderen Prinzipien nur dann erhebliche Vorteile, wenn bestimmte Bedingungen erfüllt sind, was mit einer oder mehreren Düsen je Kammer nur eingeschränkt realisierbar ist. Bei der Erzeugung einer Drallströmung mit Hilfe von Düsen entsteht ein ungünstiges Querschnittsverhältnis von Düsenbohrung und Drallkammer, so daß in der Düse jeweils eine erheblich größere Geschwindigkeit zu erzeugen ist, als sie sich als Umfangskomponente am Außenrand der Drallkammer einstellt. Hierdurch entstehen größere Reibungsverluste und weitere nennenswerte Energieverluste dadurch, daß die Geschwindigkeitsdifferenz an der Stelle der Stromvereinigung in Düsennähe weitgehendst vernichtet wird. Eine weitere erhebliche Verminderung der Umfangskomponente wird dadurch verursacht, daß die Drallströmung eine Meridiankomponente bedingt, die am Außenrand der Drallkammer mit einer tangentialen Querschnittserweiterung gleichzusetzen ist, so daß sie mit zunehmender Entfernung von der Düse entsprechend abnimmt, wodurch die Randbedingungen der Drallströmung verschlechtert werden. Diese Nachteile sind auch nicht durch mehrere Düsen je Kammer zu beseitigen, weil dadurch zwar die Geschwindigkeitsunterschiede am Außenrand vermindert werden können, jedoch bei gleichem Querschnitt die Umlaufmenge im gleichen Verhältnis vergrößert oder bei entsprechend verringertem Düsendurchmesser das Verhältnis zum Querschnitt der Drallkammer noch ungünstiger und die Feststoffbelastbarkeit des Trenngerätes entscheidend vermindert wird.

Aus der US-A-4 230 564 ist ein Trenngerät zur Umkehrosmose und Ultrafiltration bekannt, das in einem zylindrischen Gehäuse zwei gleichsinnig und mit unterschiedlichen Drehzahlen umlaufende Rotoren aufweist, um die Reibung und hydraulische Verluste zu verringern sowie die Restenergie der aus dem Trenngerät ausfließenden Flüssigkeit auszunutzen. Der innere Rotor durchragt mit seiner Welle den anderen die Filterplatten tragenden Rotor und weist je ein Turbinenrad mit Leitelementen an seinen beiden Enden auf.

Aus der FR-A-2 383 694 ist ein Flachmembran-Trenngerät der angegebenen Gattung bekannt, bei dem in einem gemeinsamen zylindrischen Gehäuse eine Vielzahl von gleich dimensionierten Filterscheiben zu Trennblöcken zusammengefaßt sind. Zwischen einzelnen Filterscheiben bzw. Trennblöcken sind Umlenkscheiben vorgesehen. Jede Scheibe trägt am Außenrand einen Ringflansch zur dichten Einspannung der Filtermembranen, welche die Spalträume zwischen benachbarten Filterscheiben verengen und unerwünschte Druckverluste verursachen. Gesonderte Leitelemente zur Führung der Strömung und zur gezielten Drallerzeugung sind nicht vorgesehen. Eine Möglichkeit zur unlösbaren Befestigung der Membranen an den Filterscheiben ohne die Außenränder verdickende Klemmflansche ist in der EP-A-0 030 905 angegeben.

Aufgabe der Erfindung ist es, ein Flachmembran-Trenngerät zu schaffen, bei dem diese Nachteile mit einfachen Mitteln beseitigt werden und mit dem ein günstigeres Verhältnis von Trennleistung und Energieaufwand, eine gesteigerte Feststoffbelastbarkeit sowie eine weniger aufwendige Wartung zu erreichen ist.

Diese Aufgabe wird durch die Merkmale des Patentanspruchs 1 gelöst.

Mit dem erfindungsgemäß ausgebildeten Gerät werden hohe Trenneffekte durch eine breit variierbare und örtlich nahezu ausgeglichene Drallströmung erreicht, so daß sowohl verlustreiche Energiespitzen und unterdepolarisierte Flächenanteile wie auch örtliche Überbeanspruchungen der Membranen vermieden werden. Die Mittel zur Drallerzeugung können derart verändert werden, daß sich sowohl ein weiterer Abbau der Energieverluste wie auch eine größere Unempfindlichkeit gegenüber Feststoffbelastungen ergibt. Bei nahezu ausgeglichener Randströmung werden durch die Gestaltung des Trenngerätes die Wirkung von Coriolis- und Zentripetalkräfte sowie der Flüssigkeitsreibung so berücksichtigt, daß eine annähernde Geschwindigkeitskonstanz und schon bei geringen Umlaufmengen eine über die Gesamtfläche reichende Turbulenz gewährleistet wird. Eine weitere Senkung des Energiebedarfs tritt dadurch ein, daß die gegenüber einer Drallströmung mit $c_u r$ = konstant auftretenden radialen Druckunterschiede erheblich abgebaut werden.

Die erfinderischen Elemente können zu großen Flachmembran-Trenngeräten zusammengebaut werden. Die zur Depolarisierung erforderliche spezifische Umlaufmenge kann vermindert werden. Schließlich liegen günstige Voraussetzungen zum Lokalisieren und Auswechseln defekter Membranen vor.

Die Leiteinrichtung besteht aus einer zentral nicht durchbohrten Umlenkscheibe, die einen gegenüber dem Ringteil verminderten Durchmesser hat, einer als Einlaufnabe ausgebildeten rotationssymmetrischen zentral an der Einlaufseite der Umlenkscheibe angeordneten Erhebung sowie aus einer Anzahl vorzugsweise radieler und nur in einer Ebene gekrümmter Leitschaufeln, die auf der Einlaufgegenseite durch die Umlenkscheibe und auf der Einlaufseite der Kammer entweder durch die Trennplatte oder zum Ausgleich der Fertigungstoleranzen mit einer gesonderten zentral durchbohrten Abdeckscheibe seitlich begrenzt werden.

Das vorzugsweise mit der Leiteinrichtung verschraubte filterscheibenpaket erhält dadurch eine zur Leiteinrichtung funktionsgerechte Anordnung, daß zwischen je einem Filterscheibenpaar durch vorzugsweise drei eingelegte Distanzringe ein durch die Höhe der Distanzringe bestimmter, am inneren und äußeren Scheibenrand offener Spalt entsteht, wobei die Lage der Distanzringe mit entsprechend vorzugsweise in der Nähe des Innenrandes der Filterscheiben eingelassenen Bohrungen übereinstimmt. Dabei sind vorzugsweise in Längsrichtung genutete oder abgeflachte Spann- und Permeatableitbolzen durch die Bohrungen der Filterscheiben und Distanzringe hindurchgeführt, mit denen die Filterscheiben und Distanzringe dichtend zusammengespannt und an einer der die Kammer begrenzenden Trennplatten angeflanscht werden, wobei gleichzeitig durch die Nute oder Abflachungen der Spann- und Permeatableitbolzen eine Flüssigkeitsverbindung zwischen dem innerhalb der Membranen und Filterscheiben eingebetteten porösen Material, der zwischen Trennplatte und einer zusätzlichen Abdeckplatte eingelassenen Ringnut, einer in der Trennplatte sich von dort radial erstreckenden Bohrung und dem sich hieran anschließenden Permeatablaufstutzen einer Kammer entsteht. Hierbei wird die im Bereich der Distanzringe durch den Spanndruck entstehende Verminderung des Durchflußquerschnittes des porösen Materials mit Hilfe von paarweise in die exentrischen Bohrungen der Filterscheiben eingelegten Druckplatten dadurch ausgeglichen, daß diese einen gegenüber den Distanzringen größeren Durchmesser erhalten und daß sie außerhalb des Auflagebereiches der Distanzringe vorzugsweise durch vertikale Bohrungen flüssigkeitsdurchlässig gestaltet und derart in den Filterscheiben eingelagert und/oder an der inneren Plattenstirnseite ausgebildet sind, daß ein mit dem porösen Material und den Längsnuten oder Abflachungen der Spann- und Permeatableitbolzen verbundener Hohlraum entsteht.

Ein weiteres Merkmal der Lösung ist eine Kombination von erfindungsgemäß gestalteten Spann-, Klemm- und Verriegelungsringen, die die kreisringförmigen Filterscheiben und Membranen an ihren Innen- und Außenrändern dichtend verbinden, derart, daß diese Spannkombination ohne größeren Aufwand eingesetzt, gelöst und wiederverwendet werden kann sowie ohne Verminderung der Spaltquerschnitte an den Rändern der Filterscheiben zu realisieren ist. Dementsprechend besteht der zur äußeren Spannkombination gehörende Spannring aus einem dünnen, den Membranrand in geringer Breite abdeckenden Dichtflansch, an dem sich außen ein über die Dicke der Filterscheibe hinausreichender, überwiegend konisch erweiterter Ansatz anschließt, der am Ende radial soweit nach innen eingezogen ist, daß der die Gegenseite abdichtende, außen mit einem verjüngenden Konus verstärkte Klemmring gerade zwischen Spannring und Filterscheibe einlegbar und nach dem Spannen der zwischen Filterscheibe und Membranen eingelegten Dichtringe mit Hilfe eines in die radiale Einziehung des Spannringes einfügbaren, vorzugsweise endlosen Verriegelungsringes sicher arretierbar wird, Während sich die entsprechenden Teile der inneren Spannkombination aus einer auf eine Bohrung modifizierte analoge Gestaltung ergeben.

Bei einer Ausführung, bei der die sich jewils über eine Trennplatte und einen Ringteil erstreckenden Moduln mittels Zuganker zu einem Flachmembran-Trenngerät dichtend zusammengefügt werden, sind für die zwei Führungsanker außen an der Trennplatte entsprechend des Durchmessers der Zuganker in tangentialer Richtung geschlitzte Zapfen vorgesehen, die fluchtend zur Lage der Zuganker aufgebohrt werden, so daß durch die Zuganker zentrierte Arretierringe einschiebbar sind, wodurch eine volle axiale, jedoch leicht lösbare Führung bei einer vertikalen Aufstellung des Flachmembran-Trenngerätes erreicht wird. Damit ein axiales Herausgleiten des Arretierringes verhindert wird, ist der Arretierring an der Auflageseite mit einem Bund und an der Einsteckseite mit einer über die Dicke des Führungszapfens hinausreichenden Nase versehen, die in der Breite entsprechend der Schlitzweite bemessen ist und die nach Drehung des eingeschobenen Arretierringes sichernd unter oder über den Führungszapfen greift sowie bei einer vorzugsweise von unten erfolgten Einführung in eine im Führungszapfen eingelassene Kerbe einrastet.

Die zu trennende Rohlösung wird unter einem Überdruck in das Flachmembran-Trenngerät geleitet, so daß eine Triebkraft für einen Flüssigkeitsstrom durch die Membranen vorhanden ist. Hierbei werden die gelösten Stoffe von den Membranen zurückgehalten, während das als Permeat bezeichnete Lösungsmittel in das zwischen Membranen und Filterscheiben eingebettete poröse Material und dort in Richtung der in den Filterscheiben eingelassenen, außerhalb der Distanzringauflage flüssigkeitsdurchlässig gestalteten Druckplatten fließt, so daß es in dem jeweils durch ein Plattenpaar gebildeten Hohlraum gesammelt und von dort in den Nuten oder Abflachungen der Spann- und Permeatableitbolzen zu der zwischen Trenn- und Abdeckplatte eingelassenen Ringnut geleitet wird. Mit diesem Ableitsystem sowie der in jeder Trennplatte zwischen Permeatablaufstutzen und Ringnut radial angeordneten Bohrung wird für das Scheibenpaket jeder Kammer ein separater Permeatabzug verwirklicht.

Ein derartiger Trennvorgang kann jedoch nur dann effektiv aufrechterhalten werden, wenn sich die stark prozeßhemmende an der Membranoberfläche konzentrierende abgetrennte Phase wirksam depolarisieren läßt. Erfindungsgemäß wird hierzu die Rohlösung mit Hilfe einer Umlaufpumpe axial in die Bohrung der ersten Kammer des Flachmembran-Trenngerätes gefördert, wo sie zunächst durch die Einlaufnabe radial nach außen und danach mit Hilfe der Leitschaufeln tangential umgelenkt wird, so daß im vom Ringteil und Filterscheibenpaket eingeschlossenen Ringraum eine durch den Austrittswinkel der Leitschaufeln und der Umlaufmenge bestimmte Umfangskomponente entsteht. Diese Geschwindigkeitskomponente wird durch eine aus dem Förderstrom resultierende Meridiankomponente überlagert, so daß radial nach innen gerichtete Teilströme durch die von den Filterscheiben gebildeten Depolarisierungsspalte gedrückt werden. Hierbei erzeugt die Radialbewegung tangentiale Beschleunigungskräfte, mit denen ein Äquivalent zu den entgegengesetzt gerichteten Reibkräften derart zu erreichen ist, daß die Größe der mit Hilfe der Leiteinrichtung erzielten äußeren Umfangsgeschwindigkeit über der gesamten Scheibenfläche annähernd erhalten bleibt, bis die Flüssigkeit den durch die Bohrungen der Filterscheiben gebildeten inneren Kanal erreicht, in dem sie axial zur jeweils nächsten Kammer des Flachmembran-Trenngerätes strömt.

Ein weiterer Effekt, den die erfindungsgemäße Ausführung ausnutzt ist, daß die Strömungsbedingungen einen unterschiedlichen Differenzdruck in den Depolarisierungsspalten des Filterscheibenpaketes erzeugen, so daß die im Ringteil mit zunehmenden Abstand von der Leiteinrichtung durch Reibung abklingende äußere Umfangskomponente durch einen sich entsprechend erhöhenden radialen Teilstrom ausgeglichen wird, wodurch eine der Konzeption des Flachmembran-Trenngerätes gerechte Anzahl von Filterscheiben je Kammer vorgesehen werden kann, bei denen auf diese Weise ein gleicher Trenneffekt zu erreichen ist.

Genau die gleichen Effekte werden in jeder Kammer bei geringen von Kammer zu Kammer entstehenden Druckverlusten erzielt, so daß sich die erfinderischen Elemente auch zu großen Flachmembran-Trenngeräten zusammenfügen lassen, bei denen die Rohlösung bzw. das Konzentrat mit einem vergleichsweise geringen Druckabfall aus der letzten Kammer wieder der Umlaufpumpe zugeführt wird, so daß hierbei auch ein günstiges Verhältnis von Umlaufmenge und Druckabfall zu erreichen ist.

### Ausführungsbeispiel

Die Erfindung soll nachfolgend an einem Ausführungsbeispiel näher erläutert werden. Die dazugehörigen Zeichnungen zeigen:

Fig. 1 - den Längsschnitt durch eine Kammer bzw. durch einen Modul des Flachmembran-Trenngerätes,

Fig. 2 - den Querschnitt des Flachmembran-Trenngerätes an der Stelle der Leitschaufeln der Leiteinrichtung,

Fig. 3 - den Querschnitt des Flachmembran-Trenngerätes an der Stelle eines durch die Filterscheiben begrenzten Depolarisierungsspaltes,

Fig. 4 - den Längsschnitt durch einen an der Trennplatte angeordneten Führungszapfen mit eingeschobenem Arretierring,

Fig. 5 - den Teilquerschnitt einer Filterscheibe mit der für den äußeren rand vorgesehenen Spannkombination,

Fig. 6 - den Teilquerschnitt einer Filterscheibe mit der für den inneren Rand vorgesehenen Spannkombination.

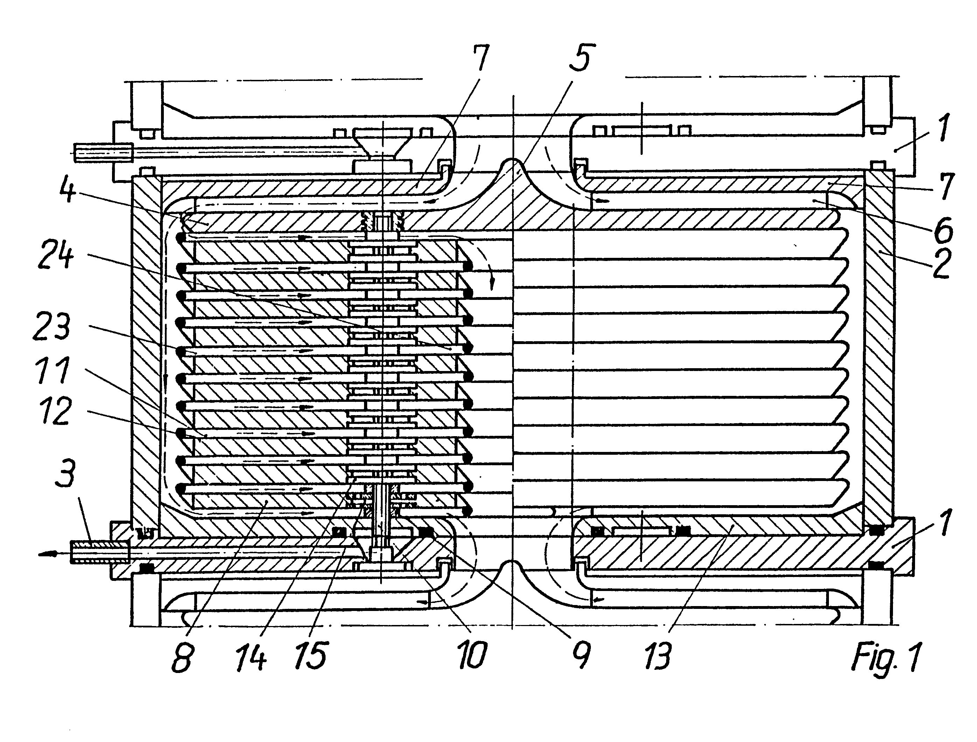

Das vorzugsweise mittels Zuganker zu unterschiedlichen Größen zusammenfügbare Flachmembran-Trenngerät besteht aus einer Anzahl in Reihe geschalteter Moduln. Die Fig. 1 zeigt den Längsschnitt einer erfindungsgemäßen Ausführung, bei der die zu einem Modul gehörenden Elemente durch stark ausgezogene Linien und Schraffur hervorgehoben werden. Diese umfassen die Kammer, die an der Kammereingangsseite angeordnete Leiteinrichtung sowie das der Leiteinrichtung nachgeschaltete Filterscheibenpaket.

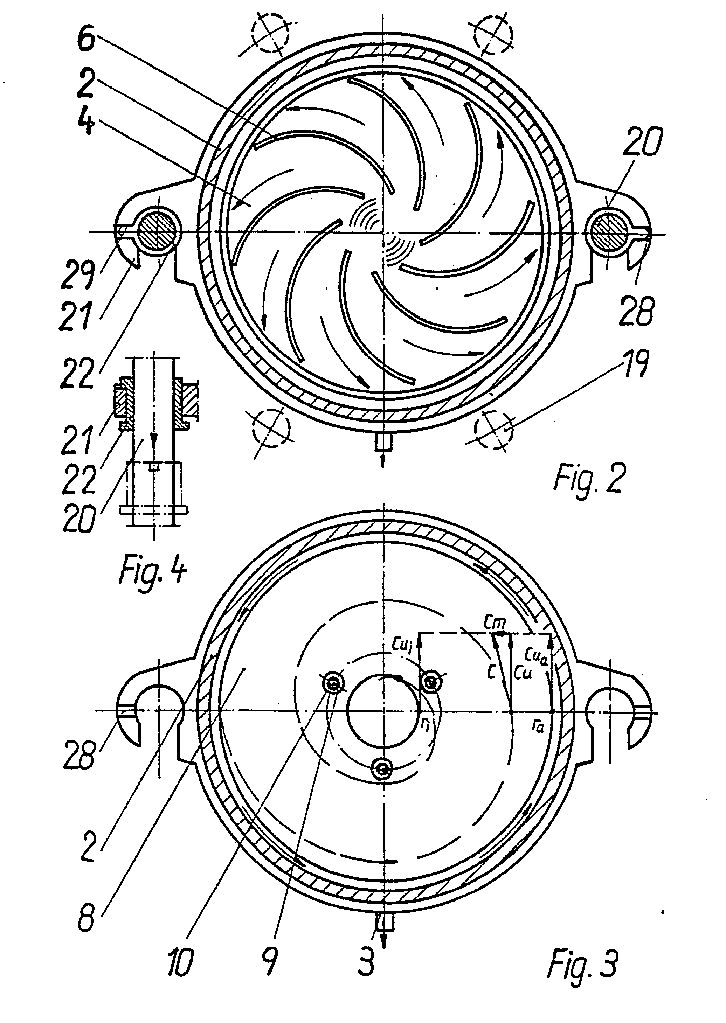

Im Ausführungsbeispiel wird die Kammer des Moduls durch den Trennplatte 1 und das Ringteil 2 gebildet, so daß diese erst nach dem Zusammenfügen der Moduln eingangsseitig durch den Trennplatte 1 des vorgeschalteten Moduls abgedeckt wird, während die Kammer des ersten Moduls des Flachmembran-Trenngerätes sowie bei einer Ausführung mit nur einer Kammer die Eingangseite durch eine zusätzliche permeatseitig verschlossene Trennplatte 1 und/oder einer der durch die Zuganker 19; 20 (Fig. 2) angepreßten in der Zeichnung nicht dargestellten Spannplatten verschlossen wird. Es kann jedoch auch vorteilhaft werden, die Trennplatte 1 und das Ringteil 2 aus einem Stück zu fertigen, wobei dann zur Abdeckung der ersten Kammer die Spannplatte eine teilweise zur Trennplatte 1 analoge Gestaltung aufweist.

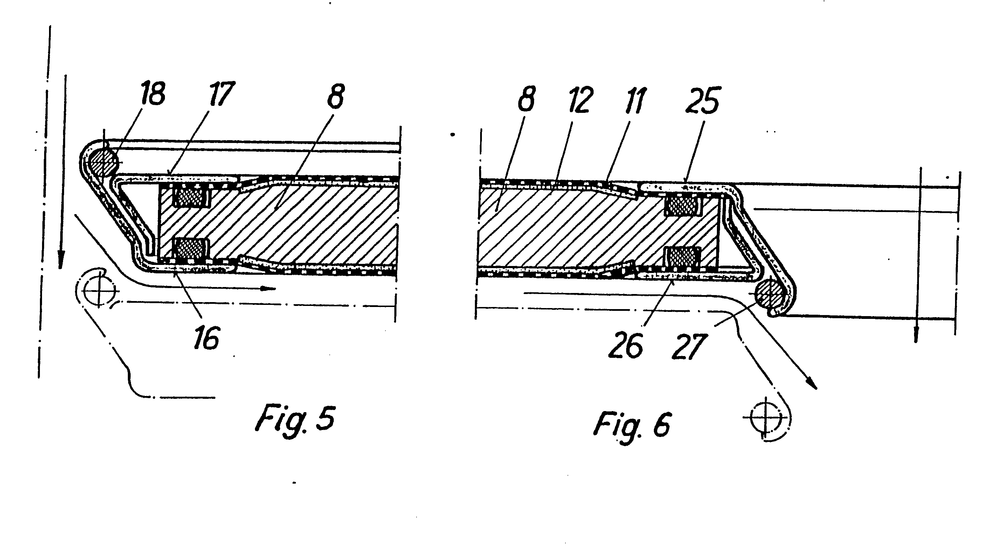

Bei der bevorzugten Ausführung gemäß Fig. 1 werden sowohl die Leiteinrichtung wie auch die Filterscheiben 6 eines Moduls mit Hilfe von drei in Längsrichtung genuteter Spann- und Permeatableitbolzen 10 gemeinsam zusammengespannt und an die zum Modul gehörende Trennplatte 1 angeflanscht, wobei die vorher eingelegten drei Distanzringe 9 zwischen jedem Scheibenpaar einen entsprechend der Höhe der Distanzringe bestimmten, am äußeren und inneren Scheibenrand jeweils offenen Spalt 23; 24 ergeben. Dabei sind die Filterscheiben 8 in an sich bekannter Weise mit Membranen 11 und einem zwischen diesen und den Filterscheiben 8 eingebetteten porösen Material 12 belegt, wobei die Ränder der Membranen 11 und der Filterscheiben 8 mit Hilfe erfindungsgemäßer Spannkombinationen entsprechend Fig. 5 und Fig. 6 dichtend verbunden sind. Dadurch entstehen in einem Modul des Flachmembran-Trenngerätes zwei voneinander abgetrennte Flüssigkeitsräume bei denen der Permeatraum durch die Poren des porösen Materials 12, den Bohrungen der zum Ausgleich des Spanndruckes im Bereich der Distanzringe 9 in die Filterscheiben 8 eingelegten Druckplatten 14, den durch zwei Druckplatten 14 eingeschlossenen Hohlraum 15, der Nute der Spann- und Permeatableitbolzen 10, der zwischen Abdeckplatte 13 und Trennplatte 1 eingelassenen Ringnut, den in der Trennplatte 1 vorgesehenen drei kegeligen Bohrungen sowie der sich an einer Kegelbohrung anschließenden radialen Bohrung mit dem daran angesetzten Permeatablaufstutzen 3 gebildet wird. Während der Rohlösungs- und Konzentratraum durch die zentralen Bohrungen der Trennplatte 1 mit dem der anderen Moduln verbunden ist, gewährleistet die erfindungsgemäße Anordnung für jeden Modul einen separaten Permeatabzug, der Membrandefekte blockweise lokalisieren läßt, so daß im Störungsfall nur der betreffende Modul ausgewechselt werden muß, der sich danach zwischenzeitlich leicht regenerieren läßt.

Die am Rohlösungs- bzw. Konzentrateintritt mit dem Filterscheibenpaket verschraubte Leiteinrichtung erhält bereits durch die Einlaufnabe 5, die Umlenkscheibe 4 und die Leitschaufeln 6 eine funktionsgerechte Ausführung, falls die Leitschaufeln 6 seitlich genau mit der Stirnseite des Ringteils 2 fluchten.

Im Ausführungsbeispiel wird zur eingangsseitigen Abdeckung der Leitschaufeln 6 jedoch eine gesonderte Abdeckscheibe 7 vorgesehen, wodurch die sich summierenden Fertigungstoleranzen der einzelnen Elemente erheblich größer sein können. Weitere fertigungstechnische Erleichterungen entstehen dann, wenn die aus Plaste herstellbare Leiteinrichtung nicht aus einem Stück, sondern mit getrennter Abdeckscheibe 7 vorgesehen wird, wobei dann jedoch zwischen der Trennplatte 1 und der Abdeckscheibe 7 in Fig. 1 nicht dargestellte elastische Andrückringe eingelegt werden. Bei kleineren Umlaufmengen können jedoch auch die Spann- und Permeatableitbolzen 10 durch an diesen Stellen verdickte Leitschaufeln bis zur Abdeckscheibe 7 geführt werden.

Fig. 2 zeigt den Querschnitt des Flachmembran-Trenngerätes bzw. den eines Moduls an der Stelle der Leitschaufeln 6 mit Blickrichtung auf die Einlaufnabe 5. Das entsprechend dieser Darstellung senkrecht von oben in den Modul einströmende Konzentrat wird nach der radial nach außen gerichteten Umlenkung durch unterschiedlich formbare Leitschaufeln 6 tangential beschleunigt. Im Ausführungsbeispiel sind hierfür einfache Kreisbogenschaufeln vorgesehen. Vorteilhafter werden jedoch Leitschaufeln 6 mit einem Krümmungsverlauf, der nicht über die Schaufellänge konstant bleibt. In Abweichung vom Ausführungsbeispiel werden bei größerem Moduldurchmesser zusätzlich verkürzte Zwischenschaufeln angeordnet, die die Führung der Flüssigkeit am Außenrand der Leiteinrichtung verbessern.

Die am Austritt der Leiteinrichtung entstandene völlig ausgeglichene Drallströmung wird durch die entsprechend gestaltete Abdeckscheibe 7 strömungsgünstig in Richtung Filterscheibenpaket umgelenkt.

Fig. 3 verdeutlicht durch einen Querschnitt des Moduls an der Stelle eines durch die Filterscheiben 8 begrenzten Depolarisierungsspaltes ein mit der erfindungsgemäßen Ausführung erzeugbares Geschwindigkeitsbild, das über der Membranfläche mit bereits relativ geringen Meridiangeschwindigkeiten $c_m$ zu erreichen ist, so daß die Umfangskomponente $c_u$ für den Depolarisierungseffekt maßgebend wird. Während die mit der Leiteinrichtung erzeugte Randkomponente $c_{ua}$ durch die tangentialen Beschleunigungskräfte über den Bereich von $r_a$ bis $r_i$ annähernd erhalten bleibt, klingt diese durch Reibung im Ringraum zwischen Ringteil 2 und Filterscheiben 8 mit zunehmender Entfernung von der Leiteinrichtung ab. Gleichzeitig verändern sich damit jedoch auch die Druckanteile von einer Filterscheibe 8 zur anderen, so daß der Geschwindigkeitsabfall im Ringraum durch eine sich erhöhende Teilstrommenge je Filterscheibenspalt ausgeglichen wird, wodurch die tangentialen Beschleunigungskräfte zunehmen. Der Modul wird dadurch derart bemeßbar, daß sich das mit Fig. 3 gezeigte Geschwindigkeitsbild im mittleren Bereich des Filterscheibenpaketes einstellt, während bei den ersten Depolarisierungsspalten die größere Umfangskomponente $c_{ua}$ durch einen geringeren Wert $c_{ui}$ und bei den letzten Scheiben des Filterpaketes die kleinere Umfangsgeschwindigkeit $c_{ua}$ durch größere Werte $c_{ui}$ kompensiert werden, so daß für eine ausreichende Anzahl von Filterscheiben 8 je Modul ein etwa gleicher Trenneffekt zu erreichen ist.

Fig. 4 zeigt einen Teillängsschnitt durch einen der an der Trennplatte 1 angeformten Führungszapfen 21 mit eingeschobenem Arretierring 22, der in dieser Lage eine volle axiale Führung des Moduls sichert, was bei einer vertikalen Aufstellung des Moduls notwendig ist. Die Vorrichtung gewährleistet, daß im Störungsfall der betreffende Modul leicht aus dem Flachmembran-Trenngerät herauszunehmen ist, ohne die darüberliegenden Moduln einzeln axial über die Führungszuganker 20 abtragen zu müssen. Die Lösung der Führung erfolgt durch Drehung des Arretierringes 22, bis die an der einen Seite angeordnete Nase 29 mit dem Schlitz des Führungszapfens 21 fluchtet und sich der Arretierring 22 aus dem aufgebohrten Schlitz des Führungszapfens 21 axial herausziehen läßt.

Bei einer Anordnung gemäß Fig. 4, die ein Einschieben des Arretierringes 22 von unten vorsieht, wird die Führung zusätzlich mit Hilfe einer in den Führungszapfen 21 eingelassenen Kerbe 28 gesichert, in die die Nase 29 des Arretierringes 22 nach dem Einschieben und Drehen einrastet. Eine weitergehende Sicherung wird erreicht, wenn zwischen dem Bund des Arretierringes 22 und dem Führungszapfen 21 ein elastisches Zwischenglied, wie z. B. ein Weichgummiring eingelegt wird.

Fig. 5 und Fig. 6 zeigen ein Beispiel zur Ausführung der erfindungsgemäßen Spannkombination, mit der sowohl der Außenrand (Fig. 5) wie auch der Innenrand der Filterscheiben 8 mit denen der Membranen dichtend verbunden wird. Mit Hilfe einer Vorrichtung werden in den Spannring 16 die Membranen 11, das poröse Material 12 sowie die Filterscheibe 8 zentriert eingelegt. Danach erfolgt die Abdeckung der oberen Membran 11 durch den Klemmring 17, der dann mit Hilfe des Preßtellers der Vorrichtung auf die Dichtungen der Filterscheibe gedrückt wird, bis die Dichtflansche des Spannringes 16 und des Klemmringes 17 sowie die Ränder der Membranen 11 satt auf der Filterscheibe 8 aufliegen. Der jetzt leicht einfügbare Verriegelungsring 18 arretiert nach Wegnahme des Preßtellers diese Lage bei minimalem Rücksprung der Ringe, wobei er durch den Druck der verformten Dichtungen in die radiale Einziehung des Spannringes 16 geklemmt wird. In der gleichen Weise wird der innere Rand der Filterscheibe 8 mit Hilfe des Spannringes 25, des Klemmringes 26 sowe des Verriegelungsringes 27 abgedichtet. Unter Umständen wird es vorteilhaft - z. B. bei Membranen mit einer dicheren Compositlage - statt der Rundringe entsprechend Fig. 5 und Fig. 6, endlose Dichtungen mit einem U-Profil einzusetzen, so daß die Scheibenränder voll durch das Dichtmaterial eingefaßt werden.

Außer, daß die Spannkombination ohne größeren Aufwand hergestellt, eingesetzt, gelöst und wiederverwendet werden kann, erfüllt sie das Erfindungsziel gleichzeitig auch dadurch, daß die Teile aus dünnem Material herstellbar sind, wodurch die Depolarisierungsspalte 23; 24 an den Rändern der Filterscheiben 8 nicht vermindert, obwohl relativ dünne Filterscheiben 8 eingesetzt werden, die nur eine begrenzte Dickenabsetzung an der Spannstelle zulassen. Die das Widerstandsmoment erhöhenden konischen Ansätze der Spannringe 16; 25 konnten darüber hinaus noch zu Strömungsvorteilen genutzt werden, da ihre Formgebung die Bedingungen zur Stromteilung und -vereinigung verbessert. Gegenüber den Ausführungen gemäß Fig. 5 und Fig. 6 ist es weiterhin vorteilhaft, Verriegelungsringe mit einem entsprechend vom Kreisquerschnitt abweichenden Profil zu verwenden, das eine absatzfreie Kontur zwischen der radialen Einziehung der Spannringe 16; 25 zu den Klemmringen 17; 26 herstellt. Mit vorzugsweise einzusetzenden endlosen Verriegelungsringen lassen sich die Spalte zwischen den Spannringen 16; 25 und den Klemmringen 17; 26 vollständig verschließen, wobei jedoch eine gegenüber den Dichtungen erheblich geringere Elastizität in Querrichtung zu gewährleisten ist wofür die Einlage oder Einarbeitung von Stahlspiralen vorgesehen wird.

**Aufstellung der verwendeten Bezugszeichen**

1 - Trennplatte
2 - Ringteil
3 - Permeatablaufstutzen
4 - Umlenkscheibe
5 - Einlaufnabe
6 - Leitschaufel
7 - Abdeckscheibe
8 - Filterscheibe
9 - Distanzring
10 - Spann- und Permeatableitbolzen
11 - Membran
12 - poröses Material
13 - Abdeckplatte
14 - Druckplatte
15 - Hohlraum (zwischen zwei Druckplatten)
16 - äußerer Spannring
17 - äußerer Klemmring
18 - äußerer Verriegelungsring
19 - Zuganker
20 - Führungszuganker
21 - Führungszapfen
22 - Arretierring

23 - offener Spalt-außen
24 - offener Spalt-innen
25 - innerer Spannring
26 - innerer Klemmring
27 - innerer Verriegelungsring
28 - Kerbe
29 - äußere Nase

**Patentansprüche**

1. Flachmembran-Trenngerät zum Abtrennen von echt oder kolloidal gelösten sowie teilweise suspendierten Stoffen, bestehend aus membranbelegten kreisförmigen Filterscheiben, die mit vorgegebenen Abständen gleichachsig übereinander in zylindrischen Kammern angeordnet und durch Umlenkscheiben in Stapel unterteilt sind, <u>dadurch gekennzeichnet</u>, daß je ein Filterscheibenstapel einen Flachmembran-Modul bildet, der mindestens eine stirnseitige Trennplatte (1, 7) und einen die kreisringförmigen Filterscheiben (8) unter Ausbildung eines Ringspalts umgebenden Außenring (2) aufweist, daß jeder Modul ein einlaufseitiges Leitsystem mit einer zentralen Einlauföffnung in der Trennplatte (1, 7, 13), einer Verteilernase (5) an einer Umlenkscheibe (4) und Leitschaufeln (6) zwischen der Trennplatte und der Umlenkscheibe (4) aufweist und daß die Filterscheiben (8), die Umlenkscheibe (4) und die Trennplatte (1, 7, 13) durch außermittige Distanzringe (9) und Spannbolzen (10) zusammengespannt sind, die Längskanäle aufweisen und eine Strömungsverbindung von den einzelnen Filterscheiben (8) zu einem Permeatauslaß (3) herstellen.

2. Flachmembran-Trenngerät nach Anspruch 1, bei dem die Ränder der Filterscheiben und der beidseitig aufgelegten Membranen durch profilierte Spannringe dicht miteinander verbunden sind, <u>dadurch gekennzeichnet</u>, daß jeder Spannring (16, 17; 25, 26) einen den Rand einer Membran (11) abdeckenden Flansch und einen konischen Ansatz aufweist und daß zwischen den konischen Ansätzen der beiden Spannringe (16, 17; 25, 26) ein Dichtring (18; 27) eingeklemmt ist.

3. Flachmembran-Trenngerät nach Anspruch 1 oder 2, dadurch gekennzeichnet, daß mehrere Modulen einzeln lösbar und gleichachsig übereinander montierbar sind.

4. Flachmembran-Trenngerät nach Anspruch 3, dadurch gekennzeichnet, daß an den Trennplatten (1) äußere Führungsaugen (21) angeformt sind, die seitliche Schlitzöffnungen zur lösbaren Aufnahme von Führungsankern (20) und von Arretierringen (22) aufweisen.

5. Flachmembran-Trenngerät nach Anspruch 4, dadurch gekennzeichnet, daß in den Führungsaugen (21) eine Kerbe (28) vorgesehen ist, in die eine Nase (29) am Arretierring (22) einrastet.

6. Flachmembran-Trenngerät nach einem der Ansprüche 1-5, dadurch gekennzeichnet, daß an der Oberseite und an der Unterseite jeder Trennplatte (1) je eine Ringscheibe (7 bzw. 13) vorgesehen ist und daß die Leitschaufeln (6) zwischen der oberen Ringscheibe (7) und der Umlenkscheibe (4) angeordnet sind.

7. Flachmembran-Trenngerät nach einem der Ansprüche 1-6, dadurch gekennzeichnet, daß die Längskanäle in den Spannbolzen (10) mit einer Ringnut in der Trennplatte (1) bzw. in der unteren Ringscheibe (13) kommunizieren, in die ein in der Trennplatte (1) ausgeführter Radialkanal ausmündet.

**Claims**

1. Flat membrane separating device for separating truly or colloidally dissolved and, in some cases, suspended substances, consisting of circular filter plates which are lined with membranes, arranged coaxially above one another at predetermined spacings in cylindrical chambers and divided into stacks by deflection plates, characterised in that each filter plate stack forms a flat membrane module which comprises at least one separating plate (1, 7) at the front end and an outer ring (2) which surrounds the circular filter plates (8), thus forming an annular gap, that each module comprises on the intake side a guide system with a central intake opening in the separating plate (1, 7, 13), a distribution lug (5) on a deflection plate (4) and guide blades (6) between the separating plate and the deflection plate (4), and that the filter plates (8), the deflection plate (4) and the separating plate (1, 7, 13) are clamped together by eccentric spacer rings (9) and clamp bolts (10) which comprise longitudinal channels and establish a flow connection from the individual filter plates (8) to a permeate outlet (3).

2. Flat membrane separating device according to claim 1, in which the edges of the filter plates and the membranes, which are applied on both sides, are tightly connected together by profiled clamping rings, characterised in that each clamping ring (16, 17; 25, 26) comprises a flange, which covers the edge of a membrane (11), and a conical projection, and that a sealing ring (18; 27) is clamped between the conical projections of the two clamping rings (16, 17; 25, 26).

3. Flat membrane separating device according to claim 1 or 2, characterised in that a plurality of modules can be individually detached and mounted coaxially above one another.

4. Flat membrane separating device according to claim 3, characterised in that external guide ears (21) are formed onto the separating plates (1) and comprise lateral slotted holes for accommodating guide rods (20) and locking rings (22) in a releasable manner.

5. Flat membrane separating device according to claim 4, characterised in that a groove (28), in which a lug (29) on the locking ring (22) engages, is provided in the guide ears (21).

6. Flat membrane separating device according to one of claims 1 to 5, characterised in that an annular plate (7 and 13) is in each case provided at the upper side and the underside of each separating plate (1), and that the guide blades (6) are arranged between the upper annular plate (7) and the deflection plate (4).

7. Flat membrane separating device according to one of claims 1 to 6, characterised in that the longitudinal channels in the clamp bolts (10) communicate with an annular groove in the separating plate (1) or in the lower annular plate (13) into which a radial channel, which is formed in the separating plate (1), leads.

## Revendications

1. Appareil de séparation à membranes planes pour la séparation de matières dissoutes en solution vraie ou colloïdale et dans certains cas de matières en suspension, consistant

en disques filtrants de forme circulaire garnis de membranes disposés dans des chambres cylindriques, les une au-dessus des autres sur le même axe à distance déterminée, et subdivisés en piles par des diques déflecteurs,

caractérisé en ce que:

chaque pile de disques filtrants forme un module à membranes planes présentant au moins une plaque de séparation (1, 7) sur la face frontale et une virole extérieure (2) entourant les disques filtrants de forme circulaire (8) en formant une fente annulaire,

chaque module présente du côté de l'entrée du courant un système conducteur avec un orifice central d'alimentation dans la plaque de séparation (1, 7, 13), un bec distributeur (5) sur un disque déflecteur (4) et des aubes conductrices (8) entre la plaque de séparation et le disque déflecteur (4) et

les disques filtrants (8), le disque déflecteur (4) et la plaque de séparation (1, 7, 13) sont assemblés par des bagues d'écartement excentriques (9) et des tiges de tension (10) qui ont des canaux longitudinaux et établissent une liaison de l'écoulement des disques filtrants individuels (8) vers une évacuation du perméat (3).

2. Appareil de séparation à membranes planes selon la revendication 1, dans lequel les bords des disques filtrants et les membranes appliquées sur les deux faces sont assemblés entre eux de manière étanche par des bagues de tension profilées, caractérisé en ce que:

chaque bague de tension (16, 17; 25, 26) a un collet recouvrant le bord d'une membrane (11) et une saillie conique, et un point d'étanchéité (18, 27) est serré entre les saillies coniques des deux bagues de tension (18, 17; 25, 26).

3. Appareil de séparation à membranes planes selon la revendication 1 ou 2, caractérisé en ce que:

plusieurs modules peuvent être montés sur le même axe les une au-dessus des autres et peuvent être démontés un par un.

4. Appareil de séparation à membranes planes selon la revendication 3, caractérisé en ce que:

sur les plaques de séparation (1) on a formé des oeillets extérieurs de guidage (21) qui présentent des ouvertures latérales en fente permettant de recevoir, avec démontage possible, des tourillons de guidage (20) et des bagues d'arrêt (22).

5. Appareil de séparation à membranes planes selon la revendication 4, caractérisé en ce que:

dans les oeillets de guidage (21) on a prévu une entaille (28) dans laquelle pénètre un bec (29) de la bague d'arrêt (22).

6. Appareil de séparation à membranes planes selon l'une des revendications 1 à 5, caractérisé en ce que:

sur la face supérieure et sur la face inférieure de chaque plaque de séparation (1) on a prévu un disque annulaire (7 et 13 respectivement) et les aubes déflectrices (6) sont disposées entre le disque annulaire supérieur (7) et le disque déflecteur (4).

7. Appareil de séparation à membranes planes selon l'une des revendications 1 à 6, caractérisé en ce que:

les canaux longitudinaux des tiges de tension (10) communiquent avec une rainure annulaire dans la plaque de séparation (1) ou dans le disque annulaire inférieur (13), dans laquelle débouche un canal radial pratiqué dans la plaque de séparation (1).

Fig. 1

Fig. 2

Fig. 4

Fig. 3

Fig. 6

Fig. 5